# EUROPEAN PATENT SPECIFICATION

(11) **EP 1 631 468 B1**
(45) Date of publication and mention of the grant of the patent: **13.01.2010**
(21) Application number: 04743756.1
(22) Date of filing: 10.06.2004
(51) Int. Cl.: B60J 10/08

(54) **SEALING STRIP FOR A CLOSURE MEMBER**
DICHTUNGSSTREIFEN FÜR EIN VERSCHLUSSGLIED
BOURRELET D'ETANCHEITE POUR UN ELEMENT DE FERMETURE

(30) Priority: 10.06.2003 GB 0313364; 16.06.2003 GB 0313942
(43) Date of publication of application: 08.03.2006
(73) Proprietor: Brose Fahrzeugteile GmbH & Co. KG, Coburg, 96450 Coburg (DE)
(72) Inventor: PLUM, Achim, 41748 Viersen (DE); PLOTTNIK, Reimund, 41334 Nettetal (DE); SCHLECHTRIEMEN, Martin, 96149 Breitengüssbach (DE); FREI, Manfred, 08810 St. Pere des Ribes/Barcelona (ES); SCHRAMM, Christian, 08736 Guardiola de Font-Robi (ES); CUENCA, Jose, 80191 Rubi (ES); DILLENBURGER, Ralf, 98720 Vilafranca (ES); STENZEL, Manfred, 96047 Bamberg (DE); SCHULTZ, Markus, 90425 Nürnberg (DE); POHL, Thomas, 91091 Grossenseebach (DE); WARTZACK, Sandro, 96103 Hallstadt (DE)
(74) Representative: Baumgärtel, Gunnar
(86) International application number: PCT/IB2004/001897
(87) International publication number: WO 2004/108451

(56) References cited:
- EP-A- 0 427 383
- EP-A- 1 074 416
- EP-A- 1 145 888
- US-A- 2 716 787
- US-A- 5 050 351

## Description

### Technical Field

The present invention relates to a closure member, such as a vehicle door, provided with a sealing strip which seals between the closure member and the frame of an aperture closed by the closure member, such as the frame for the door in a vehicle body shell.

Such closure member in form of a vehicle door is known from US-A 5,050,351, where the sealing strip serves at the same time for connecting an interior door cover to a door leaf.

### Disclosure of Invention

According to the present invention, there is provided a closure member comprising first and second parts and means for coupling together the first and second parts, wherein a sealing strip is provided on the closure member to seal between the closure member and the frame of an aperture closed by the closure member and for obscuring from view a connection region between the first part and the second part of the closure member, and having the additional claim elements of claim 1.

### Brief Description of the Drawings

For a better understanding of the present invention a sealing strip and a closure member provided with a sealing strip will now be provided by way of example with reference to the accompanying drawings in which:
Figure 1 shows a perspective view of inner and outer parts of a car door;
Figure 2 shows a cross-sectional view of part of the door and a sealing strip deformed to allow attachment of the inner and outer parts of the car door;
Figure 3 shows the sealing strip and door of Figure 2 after attachment of the inner and outer parts of the door;
Figure 3a shows in cross-section a modification to the Figure 2 and 3 embodiment;
Figure 3b shows in cross-section a further modification to the Figure 2 and 3 embodiment;
Figure 4 shows in cross-section a second embodiment of the sealing strip;
Figure 4a shows an overhead view of the base of the sealing strip of Figure 4;
Figures 5 and 5a show a cross-section of a third embodiment of the sealing stripl;
Figure 6 shows in cross-section an alternative arrangement to that of Figures 5 and 5a;
Figure 7 shows in cross-section a fourth embodiment of the seal;
Figure 8 shows in cross-section a fifth embodiment of the seal;
Figure 9 shows in cross-section an alternative arrangement to that of Figure 8;
Figures 10 and 10a show in cross-section and side elevation, respectively, a sixth embodiment of the seal;
Figure 11 shows in cross-section a seventh embodiment of the seal;
Figure 12 shows in cross-section a eighth embodiment of the seal;
Figures 12a and 12b show in cross-section and side elevation, respectively, a modification of the eighth embodiment;
Figure 13 shows in cross-section a further modification of the eighth embodiment;
Figure 14 shows in cross-section a modification of the seventh embodiment;
Figures 15 and 16 show in cross-section a ninth embodiment of the seal;
Figures 15a and 15b show in cross-section a modification to the Figure 15 and 16 embodiment;
Figure 17 shows in cross-section a further modification to the Figure 15 and 16 embodiment;
Figure 18a,b show cross-sectional view taken along lines B-B and A-A of Figure 18c and show a tenth embodiment;
Figures 19 and 20 show in cross-section an eleventh embodiment;
Figure 21 shows in cross-section a modification of the eleventh embodiment; and
Figure 22A,B,C show in cross-section a twelfth embodiment.

### Modes of Carrying Out the Invention

In the drawings like elements are generally designated with the same reference signs.

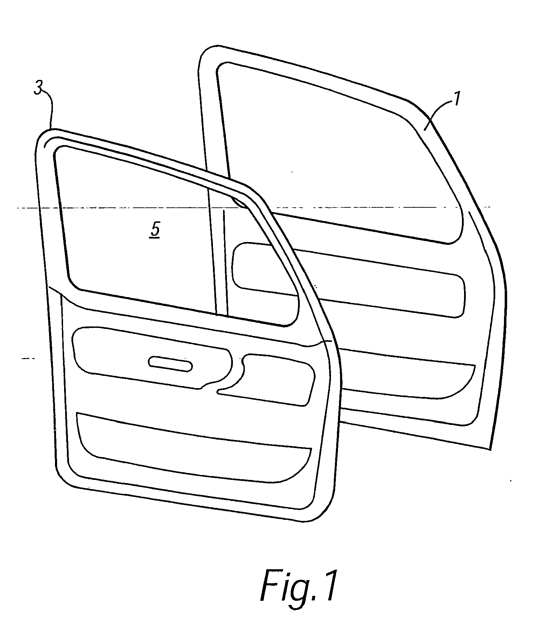

Figure 1 shows a perspective view of a first, outer part 1 of a car door and a second, inner part 3 of the door. The outer part 1 of the door comprises the surface of the door seen from the exterior of the car. The inner part 3 of the door could be a frame formed of metal, or possibly moulded plastics, and onto or into which the movable window glass 5 is fitted together with other components, such as a switch, motor and control circuit for allowing movement of the window 5; assemblies for allowing the door to be locked; loud speakers; and the like. An inner part 3 formed in this way can be advantageous because the inner part 3 of the door can be prepared away from the main production line of the car and can be fitted to the inner part 1 of the door on the production line in a quick and simple operation, saving a considerable amount of time in comparison with prior methods of door assembly which require the inner part 3, the window 5 and the various other associated components to be fitted separately on the main car production line.

The outer part 1 of the door may itself comprise more than one part, and the construction of the outer part 1 will be better understood with reference to the embodiments to be described.

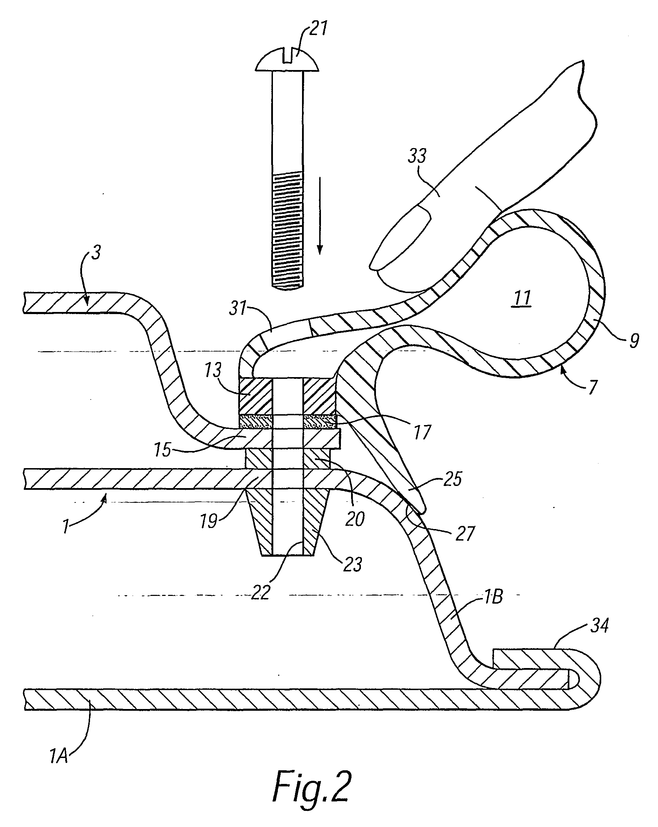

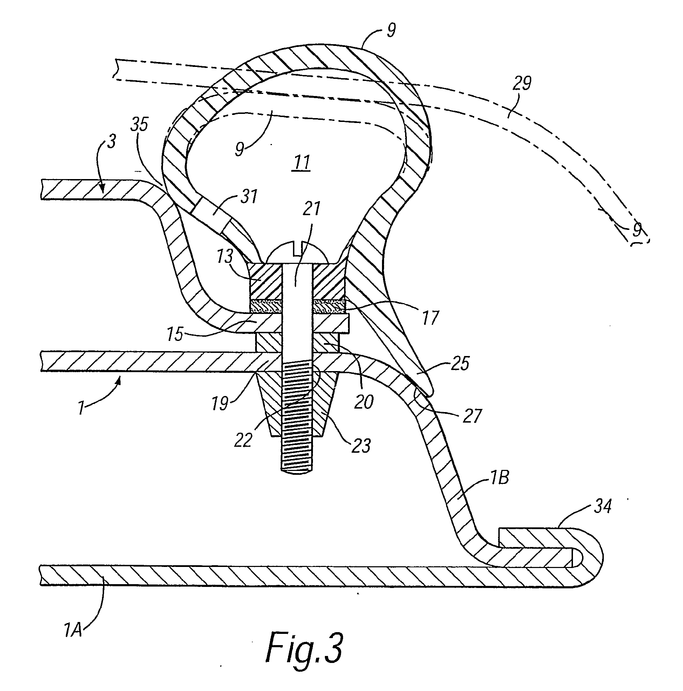

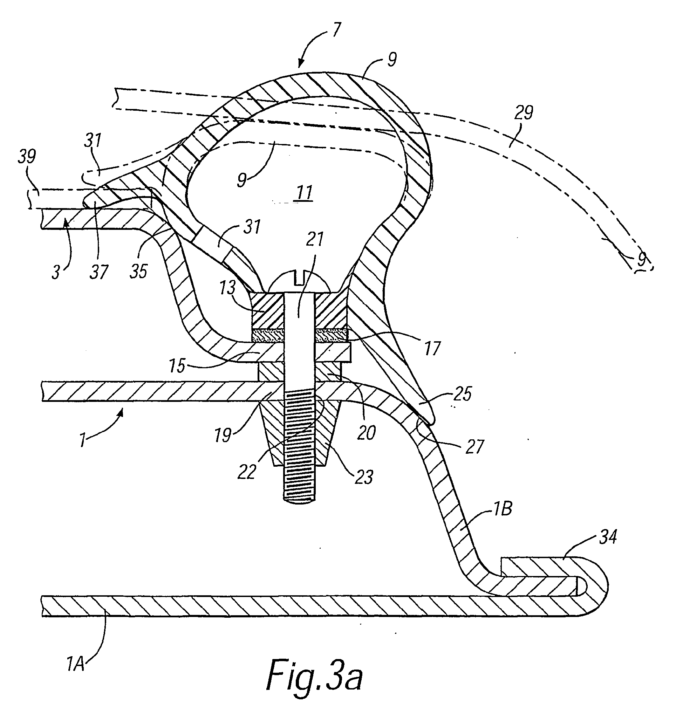

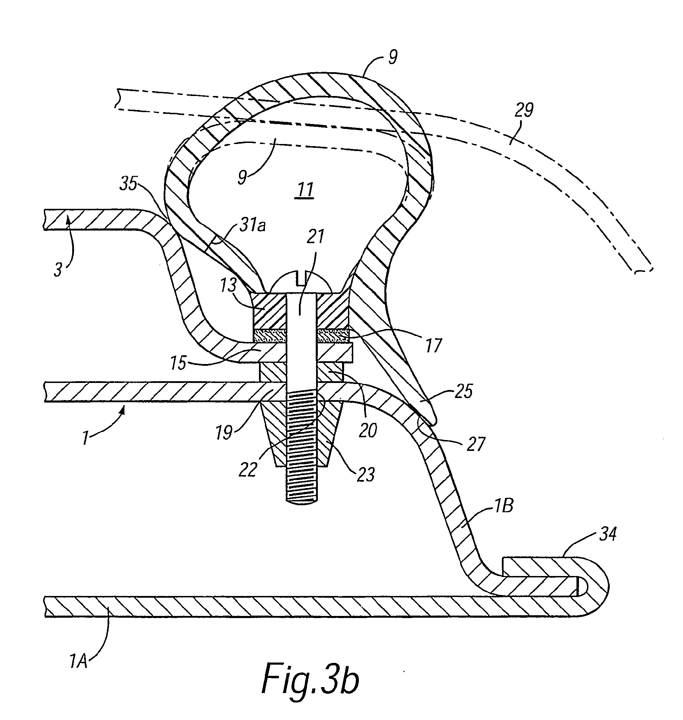

Figures 2 and 3 show a first embodiment of a seal 7 for fitting to a region of the door where the outer 1, and inner 3 parts of the door are connected together. The seal 7 provides a seal between the door and the door frame 29 formed in the vehicle body (shown by dashed lines in Figure 3). For example, the seal 7 may provide a weatherproof seal around the door to prevent moisture entering the interior of the vehicle, and also serve to minimise noise such as wind noise entering the car when the car is being driven.

In addition to insulating the interior of the vehicle from moisture and noise, the seal 7 also functions to conceal from view the point at which the outer 1 and inner 3 parts of the door meet.

The seal 7 comprises a tubular member 9 defining a hollow interior 11 (best seen in Figure 3). The seal 7 may be formed of any suitable flexible material, such as rubber or certain plastics and thermoplastic elastomers, as will be well known to those skilled in the art. The seal 7 comprises a base portion 13 which is generally planar and is configured to overlie a generally flat terminal portion 15 of the inner part 3 of the door. In this embodiment a double-sided adhesive tape 17 is interposed between the base portion 13 of the seal 7 and the terminal portion 15 of the inner door part 3. The double-sided adhesive tape 17 fixes the base part 13 to the terminal portion 15.

The terminal portion 15 of the inner door part 3 overlies a generally flat region 19 of the outer door part 1. Helically threaded screws 21 pass through apertures 22 formed through the base portion 13, the tape 17, the terminal portion 15 and the flat region 19 at spaced apart intervals around the periphery of the door (the seal 7 - of which the base 13 forms a part - and the tape 17 extending substantially continuously or only partially around the periphery of the door). The screw 21 are secured in place by a corresponding helically internally threaded frusto-conical retaining member 23 which includes a cylindrical extension 20 extending towards the terminal portion 15.

The seal 7 comprises a concealing lip 25 extending from the right hand side (as seen in the Figures) of the base 13 and which meets the inner part of the car door 1 at meeting point 27. The concealing lip 25 is held against the meeting point 27 by means of its own resilience. The concealing lip 25 conceals from view of the user of the car the point at which the outer part 1 and the inner part 3 of the door are connected together, thereby providing the door as a whole with a "cleaner" and more visually appealing overall appearance. The lip has other advantages, including reducing or preventing dirt and moisture entering the space between the outer door part 3 and the inner door part 1. The tubular part 9 of the seal 7 conceals the screws 21.

When the car door is closed the door frame 29 formed in the car body frame (shown by dash lines in Figure 3) compresses the tubular portion-9 of the seal 7 to provide an effective seal between the door and the door frame 29. The distortion of the tubular part 9 when the door is closed is shown by dash lines in Figure 3.

Figure 2 shows the means by which the screw 21 may be fitted in place in accordance with the first embodiment of the invention. A hole 31 is formed in the tubular part 9 of the seal near 7 to the base portion 13 at a position such that when the tubular part 9 of the seal 7 is pulled away from the inner part 3 of the door by a fitter[]s finger 33 (or by a suitable tool) as shown in Figure 2 the hole 31 overlies the aperture 22 formed through the base 13, the tape 17, the terminal portion 15 and the flat region 19. The alignment of the hole 31 with the aperture 22 allows the fitter to insert the screw 21 into the aperture so that its screw thread can cooperate with the corresponding screw thread on the retainer 23. Conveniently, the retainer 23 may be fixed in place in alignment with the aperture 22 by means of adhesive, or the operator may position the retainer 23 in the appropriate position to allow coupling to the screw 21.

As can be seen in Figures 2 and 3, the outer part 1 of the door comprises a generally planar outer part 1A which forms the exterior surface of the car door as seen from outside the vehicle. Although this part will be generally planar, it will be profiled to provide the desired aerodynamic and styling characteristics of the car. Where the part 1A of the outer part 1 of the door meets a coupling part 1B, the part 1A is folded over and clamped against the periphery of part 1B at point 34 to securely fit together the parts 1A and 1B. Parts 1A and 1B may additionally or alternatively be welded (such as spot welded) to one another or may be coupled by a strong adhesive or sealant.

The arrangement of the seal 7 is such that it allows the simple fixing together of the outer part 1 and inner part 3 of the door, by means of the screw 21 passing through the hole 31 and the aperture 22, by simple operation of the fitter using his finger 33 to squeeze and compress the tubular part 9 of the seal 7 in the region of the aperture 22. After the screw 21 has secured the outer part 1 to the inner part 3 of the door by cooperation of its screw thread with the screw thread of the retainer 23 the fitter can remove their finger 33 which causes the tubular part 9 of the seal 7 to resile and take up the position shown in Figure 3 where-it abuts-the-inner part 3 of the door at point 35 and is positioned for pressing against the door frame 29 when the door is closed. The abutment of the tubular part 9 to the inner part 3 at point 35 conceals the aperture 31 from view and also prevents or reduces moisture and/or dirt from entering the space 11 within the tubular part 9 via the hole 31. The tubular part 9 returns to the sealing position shown in Figure 3 by means of its own resilience.

In addition to clamping the inner part 1 to the outer part 3 of the door, the screw 21 also provides an additional force which secures the seal 7 to the door, augmenting the adhesive attachment provided by the tape 17. If desired or appropriate, the tape 17 could be omitted.

Figure 3a shows a modification to the first embodiment of the invention in which a cosmetic lip 37 is integrally formed to extend from the left hand side (as shown in Figure 3a) of the tubular part 9 of the seal 7. The cosmetic lip 37 is for fitting over a trim panel 39 (shown in dashed lines). When the trim panel 39 is present the cosmetic lip 37 overlies the trim panel 39 in the position shown by dash lines in Figure 3a. The cosmetic lip 37 presses against the trim panel 39 by means of its own resilience. The trim panel 39 may be the panel fitted to the interior surface of the car door in a conventional manner which provides the desired internal appearance to the inside of the door to provide a visually pleasing appearance and one which matches the other interior fittings of the car such as the seat upholstery.

Figure 3b shows a further modification to the first embodiment of the invention in which the hole 31 is.replaced by an elongate slit or cut 31a in the tubular portion 9. The slit or cut 31a will normally be closed, with the opposite edges thereof abutting one another.
When the tubular portion is deformed by the fitter's finger in order to insert the screw 21, the force applied to the resilient material of the tubular portion 9 causes the slit or cut 31 a to open and allows the screw 21 to pass therethrough. Therefore, with the slit or cut 31a, the appearance of the tubular portion when it is deformed will be substantially identical to that shown in Figure 2 because the slit or cut 31 a will be opened by the applied force. When the tubular portion 9 is released, it will return to the position shown in Figure 3b and the slit or cut 31 a will close again due to the resilience of the material of the tubular portion 9.

The provision of a slit or cut 31 a may be advantageous because this improves the strength of the tubular portion 9 and reduces the likelihood of dirt entering the hollow space 11 and possibly damaging the seal 7.

The seal 7 of the first embodiment may be formed of material of two different hardnesses, with the base portion 13 being formed of material which is harder than the tubular portion 9, and preferably also harder than the concealing lip 25 and the cosmetic lip 37 (if provided).

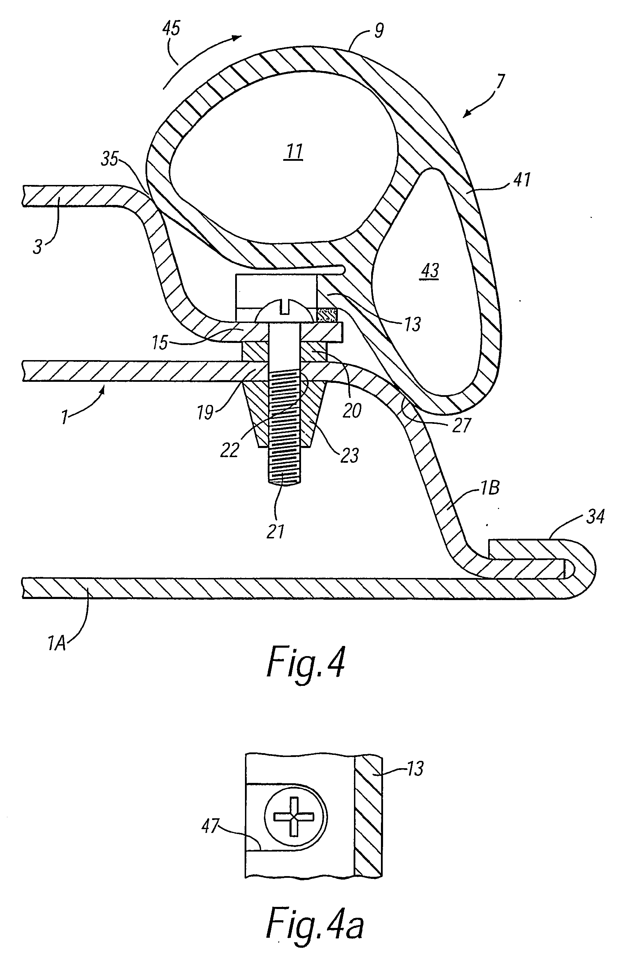

Figure 4 shows a second embodiment of the invention in which the concealing lip 25 is replaced with a concealing additional tubular portion 41 defining a hollow space 43.

In this embodiment the base portion 13 of the seal 7 is coupled to the seal at one point around the tubular part 41 (in the embodiment the base portion 13 is integrally formed with the other parts of the seal 7, although this is not essential). By coupling the base portion 13 to the seal 7 at only one point, this allows the seal 7 to be pivotted around the point at which it is attached to the terminal portion 15 of the inner part 3 of the door, as indicated by arrow 45. This can be done by the fitter applying his finger to the appropriate part of the seal 7 and pulling the seal 7 in the direction of the arrow 45. This will also squeeze and distort the seal 7. Such pivotting of the seal 7 about the pivot point exposes the aperture 22 through the tape 17, the inner part, the outer part 1 and the retainer 23 and allows the screw 21 to be fitted in this aperture 22, thereby securing the inner part 3 to the outer part 1 of the door by cooperation of its screw thread with the corresponding screw thread of the retainer 23. In this embodiment the screw head may lie against the surface of the terminal portion 15 of the inner part 3 or may preferably clamp and compress the portion of the adhesive tape 17 around the periphery of the aperture to the terminal portion 15. In this embodiment the seal 7 is secured in place by means of the adhesive tape 17, and not also by means of the screw 21. As shown in Figure 4a, recess 47 is formed in the base portion 13 of the seal 7 at the point which corresponds to the location of the aperture 22 through the inner 3 and outer 1 parts of the door, etc. at appropriate points around the periphery of the door to allow the passage of the screw 21. The recess 47 may be extended along the longitudinal direction of the seal 7 to allow for easier positioning around the screws 21.

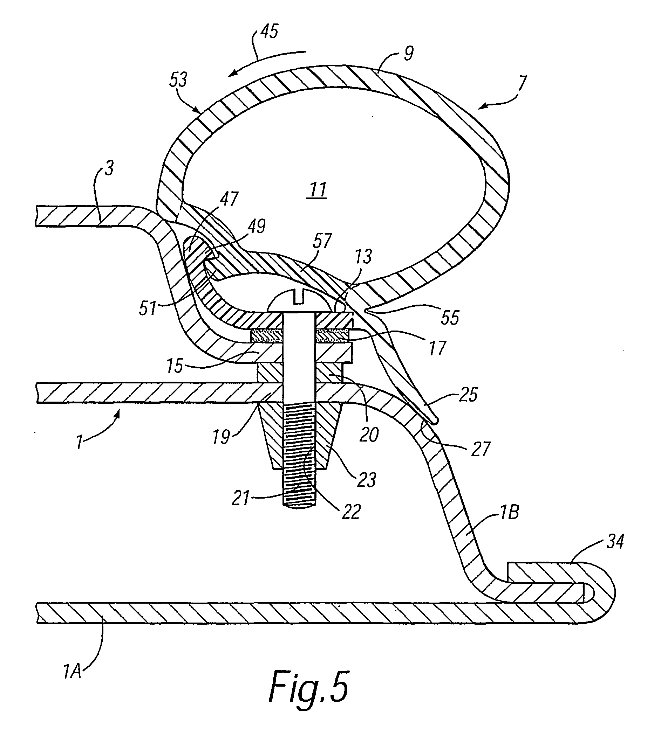

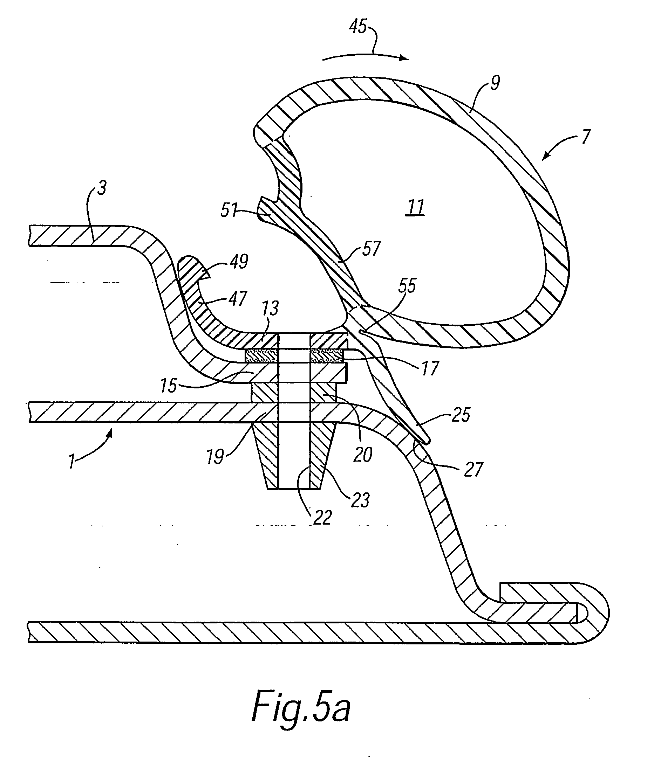

Figure 5 shows a third embodiment in which the seal 7 includes an extension 47 to the base 13 which follows the contour of the inner door part 3 and forms a ridge 49 against which an engagement lip 51 extending from the tubular portion 9 of the seal 7 abuts. The ridge 49 and the engagement lip 51 are formed of material which is rigid relative to the remainder of the tubular portion 9, which allows cooperation of the ridge 49 and the lip 51 to hold the tubular part of the seal 9 in the position shown in Figure 5 in normal use.

However, as shown in Figure 5a, to allow fitting of the screw 21 through the aperture 22 in the inner and outer door parts 1 and 3, etc. the resilience of the tubular part 9 (including the lip 51) and the base 13 (including the extension 47) allows the decoupling of the ridge 49 from the lip 51 by pressing the tubular part 9 in the region indicated by arrow 53. Such pressing can be performed, for example, by the pressure of the fitter's finger. When the ridge 49 and the lip 51 are disengaged movement of the tubular part 9 in the direction of arrow 45 causes the tubular part 9 to pivot with respect to the base portion 13 about pivot point 55. When the tubular part 45 is pivotted in the direction of arrow 45 this allows access to the aperture 22 in order that the screw 21 may be fitted to connect the outer 1 and inner 3 door parts together.

When the screw 21 has been fitted in place, the tubular part 9 pivots back in the direction opposite to arrow 45 and the ridge 49 and the lip 51 again interlock to secure the tubular part 9 of the seal in the position shown in Figure 5 so that it can provide effective sealing against the frame 29. In the position shown in Figure 5 the head of the screw 21 is concealed.

The tubular part 9 of the seal (including the abutment lip 51) may be integrally formed and may comprise a relatively rigid region 57 shown by a different hatching pattern. This tubular portion 9 may be integrally formed with the base portion 13 (including the ridge 49) or may be formed separately therefrom and coupled thereto. The base portion 13 is of material that is rigid compared to the main region of the tubular part 9, and may have a similar rigidity to the region 57 of the tubular part 9.

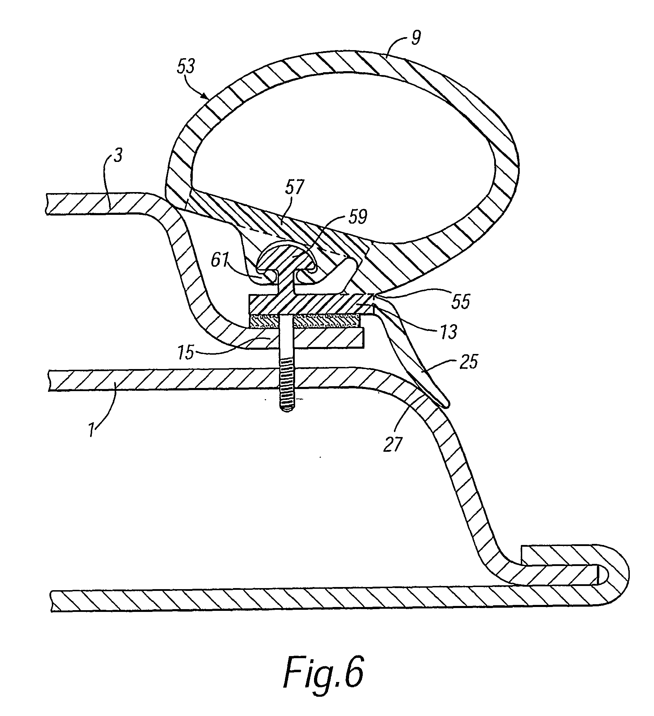

Figure 6 shows an alternative arrangement in which the ridge 49 and the lip 51 are not provided but where releasable securing of the tubular part 9 in the position shown in Figure 6 is provided for by a generally T-shaped (or mushroom shaped) protrusion 59 from the base portion 13 which cooperate with resilient lip 61 extending from the region 57 and located for cooperating with the protrusion 59 such that the lip is distorted when the protrusion 59 is pushed against the lip 61, after which the lip 61 resiles and clamp the tubular part 9 in the position shown in Figure 6. Lip 61 may be formed of material which is soft relative to the material of the protrusion 59 and the region 57 of the tubular part 9, and may, for example, be formed of material of the same softness as the main part of the tubular portion 9.

The protrusion 59 may be extruded with the seal 7.

The protrusions 59 may be circular or eliptical when viewed from overhead in which case the lips 61 may have an annular configuration. Protrusions 59 and corresponding annular lips 61 may be positioned at spaced apart intervals around the periphery of the door sufficiently close together to allow the tubular part 9 of the seal to be maintained in the position shown in Figure 6. Between any pair of protrusions 59 and corresponding lips 61 one or more screws 21 may be provided to provide the desired securing together of the outer part 1 and inner part 3 of the door. Recesses in the seal may be provided to accommodate the screws 21.

In a similar manner to the arrangement shown in Figures 5 and 5a, the tubular part 9 in Figure 6 may be pivotted with respect to the base portion 13 by pressing the tubular part 9 in the region 53, which results in uncoupling of the lip 61 from the protrusion 59, due to the resilience of the lip, and allows pivotting of the tubular part 9 about the pivot point 55 to allow access to the apertures to insert and remove the screws 21.

The concealing lip 25 may be integrally formed with the other parts of the seal 7 and may be of a material which is of a similar softness to the main part of the tubular part 9.

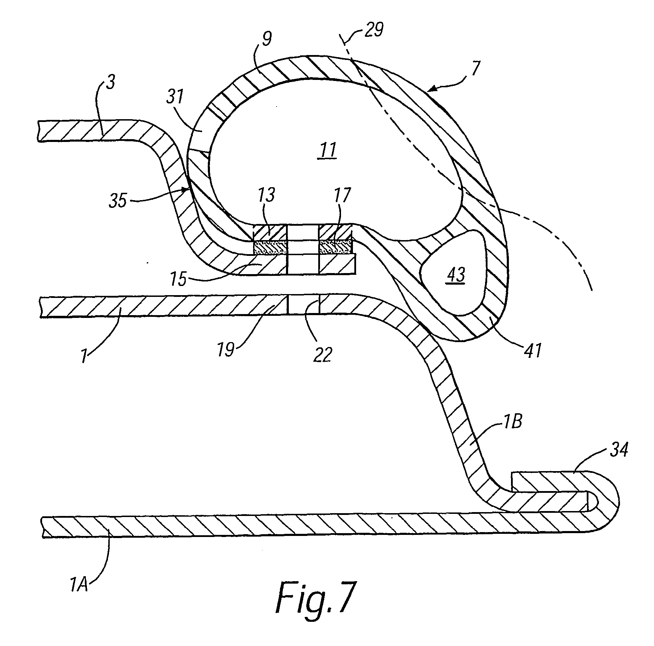

Figure 7 shows a fourth embodiment which is similar in principle to the embodiment shown in Figures 2 and 3. The concealing lip 25 is replaced by a concealing tubular portion 41 similar to that shown in Figure 4. A hole 31 is provided in the tubular part 9 to allow the securing screw 21 (not shown) to be fitted in the aperture 22 when the tubular part 9 is appropriately distorted by the fitter. The base portion 13 of the seal 7 is formed of relatively hard material to effectively locate the seal 7 by means of adhesive tape 17 onto the terminal portion 15 of the inner door part 3. In this embodiment-the tubular part 9 follows more closely the contour of the inner door part 3 and abuts against the inner door part 3 over a greater region 35 than in the Figure 2 and 3 embodiment. This improves sealing when the arrangement of the door and the door frame 29 (shown by dash lines in the Figure) are arranged to compress the seal 7 in a region lying generally opposite to the region 35.

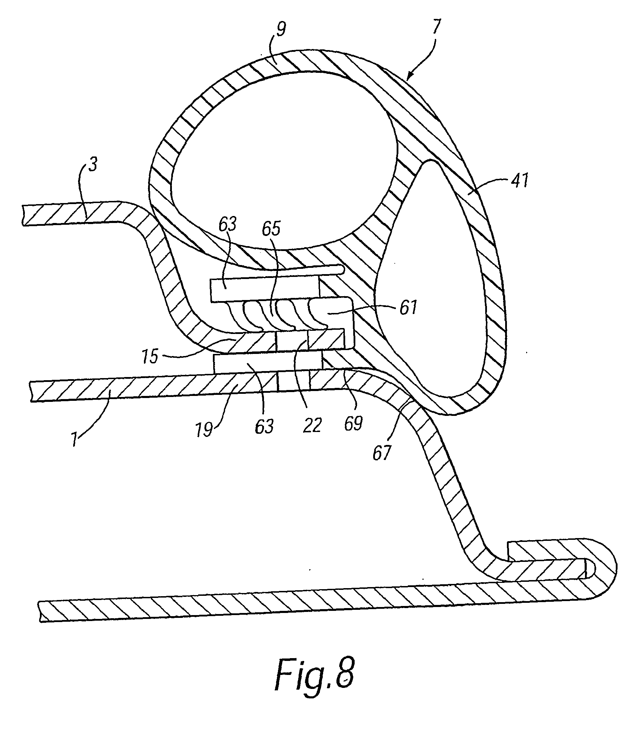

Figure 8 shows a fifth embodiment of the invention in which the outer 1 and inner 3 door parts are coupled together by a series of appropriately spaced screws (not shown) in the apertures 22 around the periphery of the door. In the Figure 8 embodiment the seal 7 has a U-shaped channel portion 61 in place of the base portion 13. The U-shaped channel portion comprises two oppositely disposed generally parallel walls 63 and 63' extending from tubular part 41. The wall 63 is provided with a series of recesses positioned to accommodate the screws fitted and spaced apart at intervals around the door periphery and which allow the relevant wall 63 to pass between the adjacent screws 21 and lie between the terminal portion 15 of the inner door part 3 and the flat region 19 of the outer door part 1. The opposite wall 63' of the channel 61 overlies the opposite surface of the terminal portion 15 and secures the seal 7 in position by means of gripping lips 65. Of course, gripping lips 65 may be provided which extend from both walls 63 and 63'. The tubular portion 41 presses against the outer door part 1 at point 67 and the lower wall 63 presses against the outer door part 1 at point 69 to prevent or reduce moisture and dirt passing into the space between the outer door part 1 and the inner door part 3.

In the Figure 8 embodiment the outer and inner door parts 1 and 3 are secured together by the series of screws prior to the seal 7 being secured thereto by pushing the U-shaped channel 61 of the seal over the terminal portion 15 of the inner door part 3.

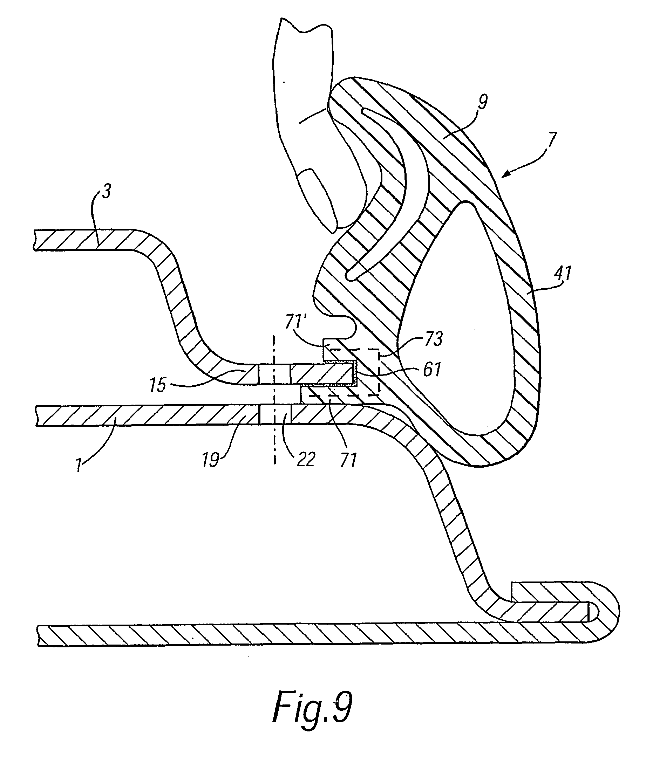

In an alternative arrangement shown in Figure 9 a U-shaped channel 61 is also formed. However, the first wall 71 and the second wall 71' of the channel are shorter than the walls 63 and 63' of the channel 61 shown in Figure 8. The first wall 71 is longer than the second wall 71' and extends almost to the periphery of the aperture 22. A generally U-shaped carrier 73 (formed of metal or any other suitable rigid material) may be provided embedded within the material of the seal 7 in the region of the U-shaped channel 61 to provide additional strength in this region and a gripping force tending to clamp the channel 61 of the seal 7 to the terminal portion 15 of the inner part 3 of the door.

The seal 7 may be fixed to the door by the clamping action of the channel 61 only, or this may be-augmented by an adhesive provided in the channel 61 and/or between the wall 71 and the outer door part 3 where the wall 71 abuts the outer door part 1.

When the seal 7 is fitted to the inner door part 3, the screws 21 (not shown) may be fitted into the aperture 22 to secure the outer door part 1 and the inner door part 3 together by compressing the tubular part 9 of the seal in the manner shown. When such a compressive force is not applied, the tubular part 9 has a configuration substantially as shown in Figure 8 to provide effective sealing against the door frame.

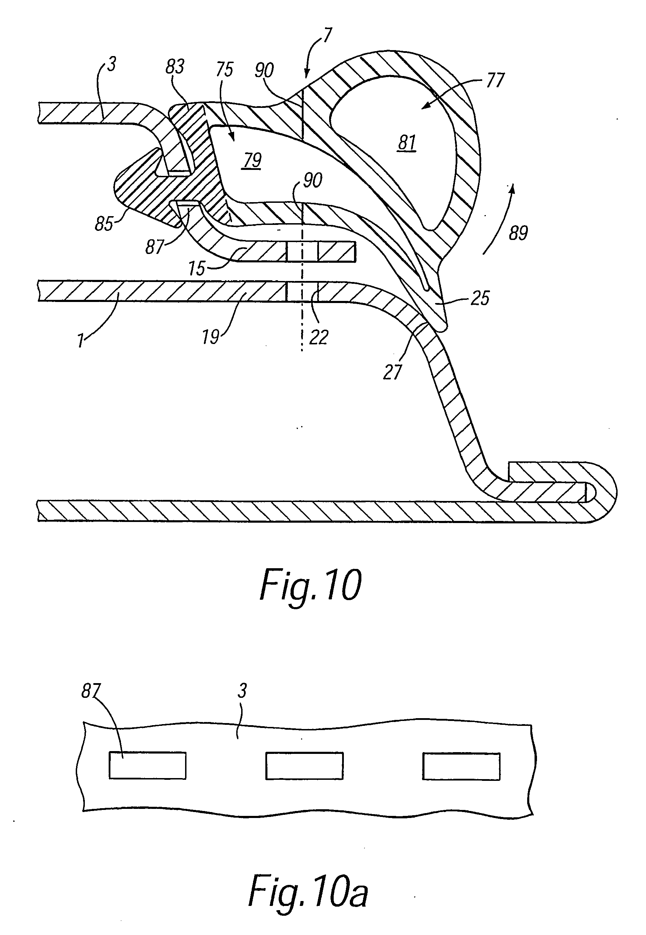

Figure 10 shows a further embodiment in which the seal has a different configuration. A first tubular part 75 is of generally triangular (in section) configuration and from which a second tubular part 77 extends which is of generally semi-circular (in section) configuration, the two tubular parts defining respective hollow spaces 79 and 81. The generally triangular tubular part 75 includes a portion curved downwardly to form concealment lip 25. The base 83 of the generally triangular tubular part 75 is formed of material which is rigid relative to the remainder of the triangular part 75 and also the semi-circular part 77. The base portion 83 lies against a wall of the inner door part 3 which is generally perpendicular to the terminal portion 15 through which the fixing screw 21 (not shown) passes. The base portion 83 comprises a protrusion 85 having a similar configuration to the protrusion 59 shown in Figure 6. This protrusion 83 is formed to cooperate with an aperture 87 formed in the inner door part 3 such that the protrusion 85 may be pushed through the aperture 87, which resiliently deforms the protrusion 85, after which the protrusion 85 resiles and serves to clamp the base portion 83 against the inner door part 3, thereby securing the seal 7 in position.

The screws 21 may be fitted by lifting the seal 7 in the direction shown in arrow 89 to reveal the aperture 22.

Alternatively, the screws may be fitted through slits 90 formed in the tubular part 75, which can be opened in a similar manner to the slits 31b of Figure 3b

The semi-circular portion 77 is pressed against the door frame (not shown) when the door is closed to provide an effective seal against moisture and noise ingress into the interior of the car.

The protrusions 85 and corresponding apertures 87 (as shown in Figure 10a) may be formed at regular spaced apart intervals to provide the necessary security of fixing of the seal 7. Of course, the protrusions 85 and apertures 87 could be replaced by cooperating clips or any other suitable form of attachment means.

Conveniently, the seal 7 would be a single integrally formed part comprising the first and second tubular parts 75 and 77, the base portion 83, the concealment lip 25 and the protrusions 85. The protrusions 85 may be formed as a continuous protrusion along the entire length of the seal 7. Selective parts of this continuous protrusion may be cut away in order to provide the desired discrete protrusions 85 described above.

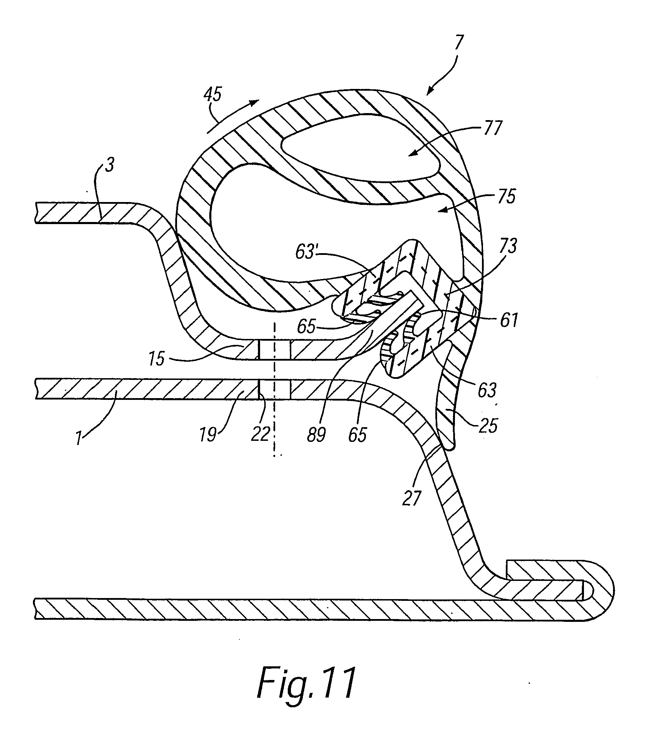

Figure 11 shows a seventh embodiment of the invention. In this embodiment first 75 and second 77 tubular portions are also provided (although they have a differend shape to the Figure 10 embodiments). In this embodiment a U-shaped channel 61 is integrally formed of relatively rigid material extending from the tubular part 75 and the concealment lip 25. Opposite walls 63 and 63' of the channel 61 each have a plurality of gripping lips 65 integrally formed therefrom to secure the sealing position on a flange extension 89 of the terminal portion 15. The flange extension 89 of the terminal portion 15 of the inner door part 3 is bent upwardly away from the outer door part 1 to increase the distance between the respective inner and outer door parts 1 and 3. This allows the U-shaped channel to have a greater width which allows lips 65 to be formed extending from both of the walls 63 and 63'.

In the Figure 11 embodiment, fixing screws may be fitted by pressing the seal in the direction of arrow 45. Alternatively, the seal can be fitted after the screws are in place.

As in the Figure 9 embodiment, the channel 61 may have a reinforcing carrier 73 embedded in the material of the channel to improve the security of the fixing of the seal 7 to the inner door part 3.

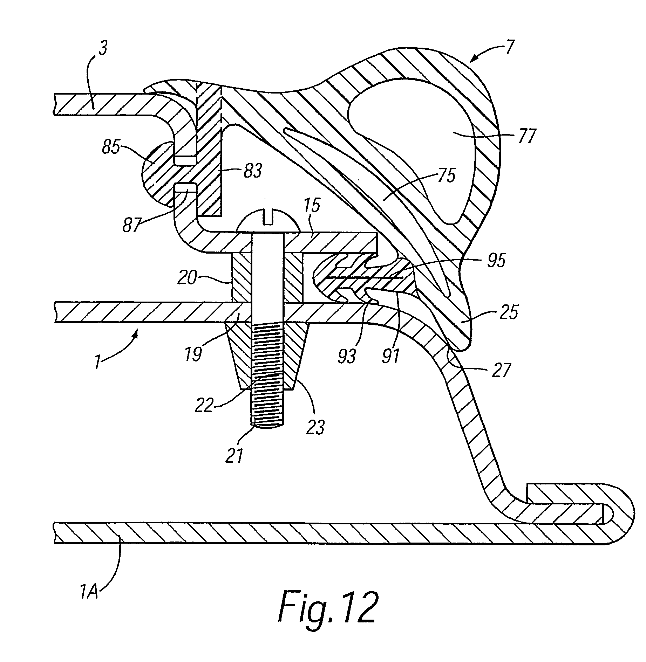

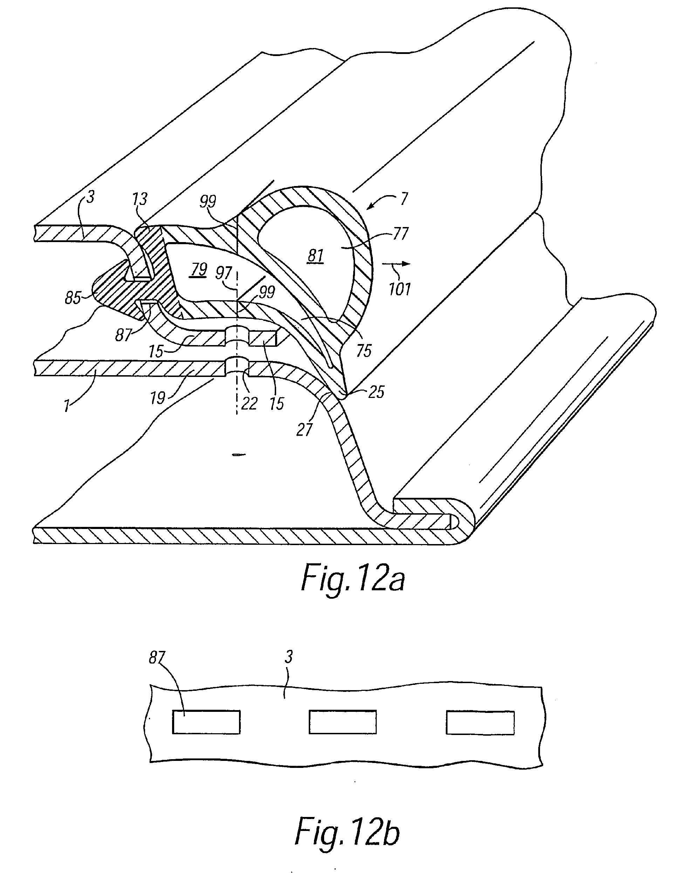

Figure 12 shows a eighth embodiment in which the seal 7 comprises a base portion 83 similar to the base portion shown in the Figure 10 embodiment from which a protrusion 85 extends through an aperture 87 also similar to the Figure 10 embodiment. The first tubular portion 75 is smaller than the tubular portion described in the Figure 10 embodiment. Extending from the first tubular portion 75 is a male member 91 from which a series of ridged portions 93 extend. The male member 91 is pushed between the outer door part 1 and the inner door part 3 after these parts have been coupled together by the fixing screws 21. The ridges 93, in combination with the protrusions 85 hold the seal 7 in position. A planar rigid carrier 95 may be provided in the male member to provide the desired rigidity to improve the security of the fixing of the seal 7. The male member 91 may be formed continuously around the seal 7, or at discrete intervals.

Figure12a shows an alternative embodiment in which the first tubular portion 75 has a configuration similar to the Figure 10 embodiment. However, in the Figure 12a embodiment the-walls of the first tubular part portion 75 are cut through along the axis 97 of the fixing screw 21 (not shown) to form a slit 99 in each of the walls. When it is desired to fit a fixing screw 21, the seal 7 is pulled in the direction of arrow 101 which, because the base 13 is fixed in position by protrusions 85, opens the slits 99 and allows the screw to pass through the thus formed openings. When the screw has been fitted in position the seal is released and the slits 99 once again close due to the resilience of the material of the seal 7.

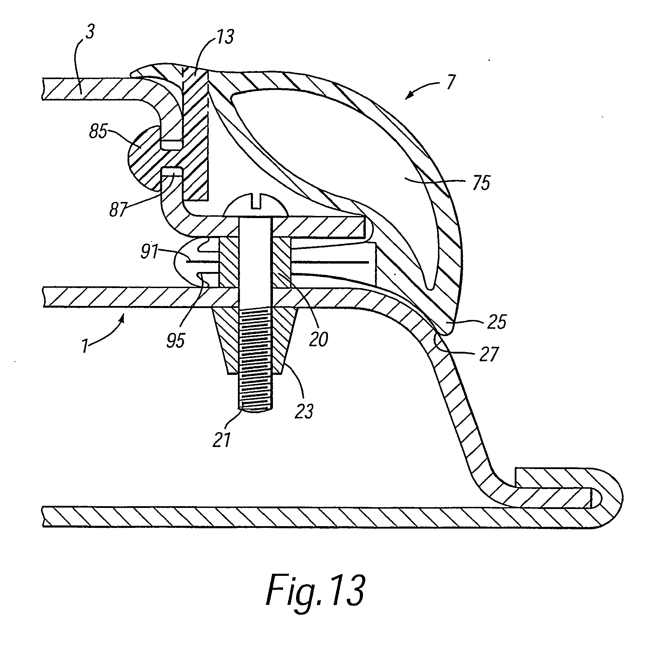

Figure 13 shows a variation on the Figure 12 embodiment in which only a single tubular portion 75 is provided. The male member 95 is longer than the male member 95 in Figure 12 embodiment and is positioned to pass between adjacent fixing screws 21 to fix the seal 7 by being clamped between the outer door part 1 and the inner door part 3.

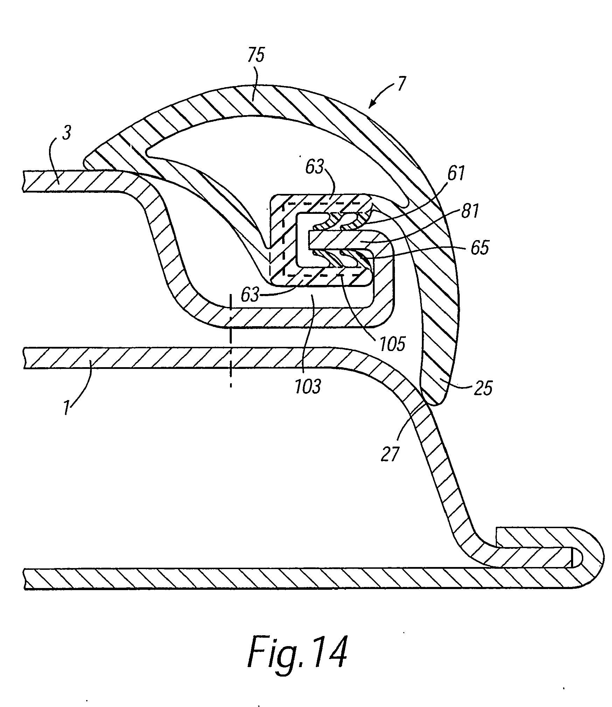

Figure 14 shows a variation of the Figure 11 embodiment. In the Figure 14 embodiment the flange extension 89 is further extended to form a U-shaped channel 103 by bending the flange extension 89 over itself. A corresponding U-shaped channel 61 extends from the single tubular portion 75 of the seal 7 and clamps to the flange extension 89 to secure the seal 7 in position. An L-shaped carrier 105 may be embedded within the material of the channel portion 61 to improve the clamping force.

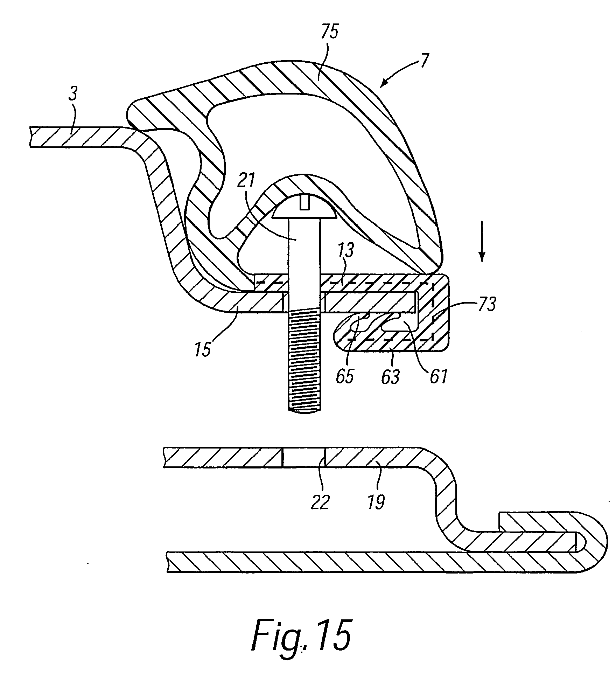

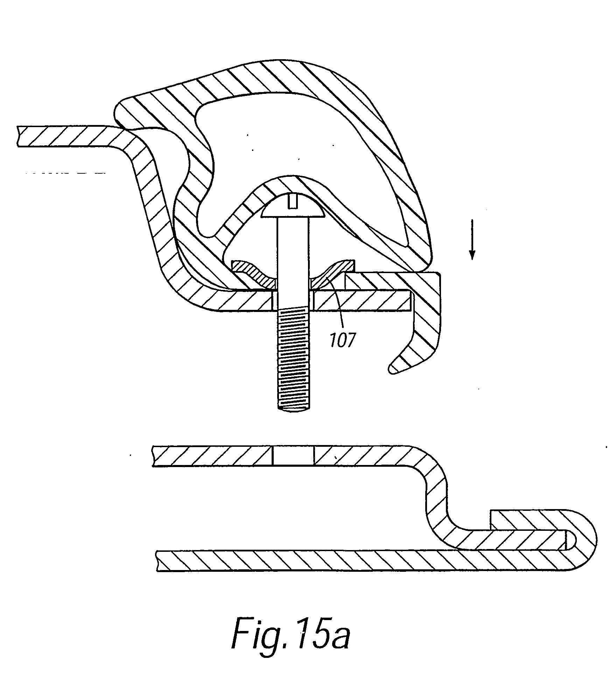

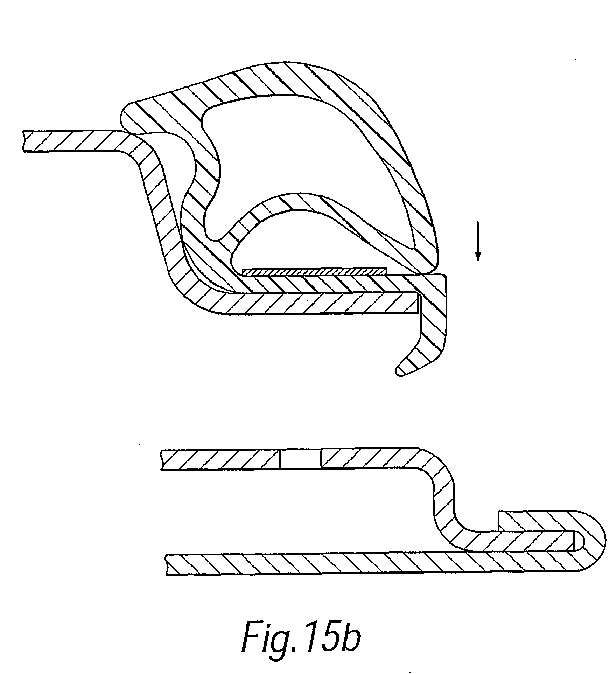

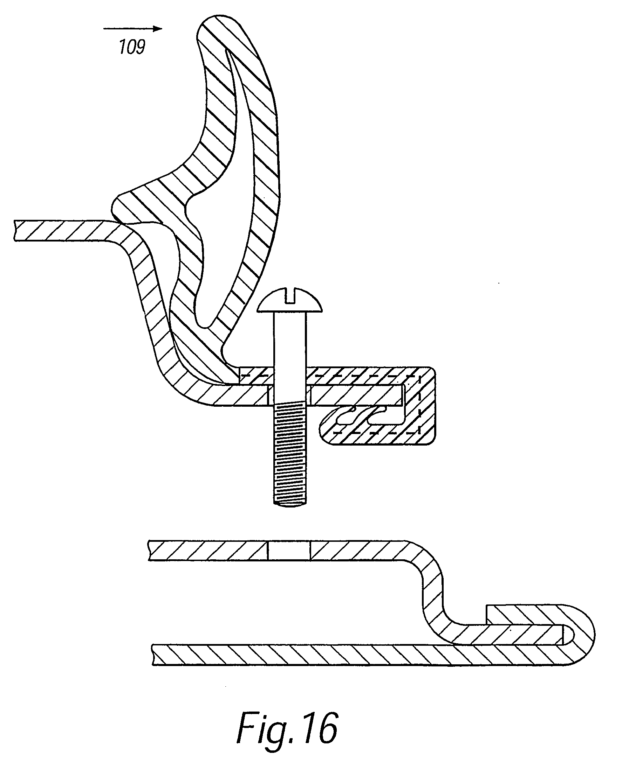

Figures 15 and 16 show a further embodiment in which the fixing screws 21 are carried by the seal 7 prior to assembly of the seal 7 to the inner door part 3. The seal 7 comprises first tubular portion 75 for pressing against the door frame. Extending from the base 13 of the seal 7 is a U-shaped channel 61 which may have embedded within it a rigid metal carrier 73. The screw is fitted in one wall of the channel 61, by means of the carrier 73. The screw 21 may alternatively or additionally be fitted in the inner panel 3. The channel 61 may have gripping lips 65 extending from one of its walls 63 to allow the seal 7 to be secured to the inner door part 3. When the seal 7 has been secured in this manner the inner door part 3 and the outer door part 1 can be brought together with the screws held in the appropriate positions and the screw-may then be used to secure together-the inner door part 3 and the outer door part 1. The diameter of the apertures 22 for the fixing screws 21 may be slightly smaller than the diameter of the screws 21 to assist in correctly positioning the screws 21.

Figures 15a and 15b show a variation of the Figure15 embodiment in which a generally disc shaped metal insert 107 is positioned around each of the apertures 22 for the fixing screws 21. The disc shaped inserts 107 clamp the base portion 13 of the seal 7 in position when the screws 21 are tightened.

Figure 15a is a partial cross-sectional view taken at a position where one of the fixing screws 21 is located. Figure 15b is a cross-sectional view taken at a different position around the periphery of the door. At this position the fixing screw 21 is not present although the metal insert 107 can be seen.

The seal may be moved from the position shown in figure 16 to that shown in Figures 15,15 a and 15b by being pushed by the fitter's finger, for example, in the direction of arrow 109 until the seal occupies the position shown in Figures 15,15a and 15b. Only gentle pressure (or a low pressure impulse) needs to be applied by the fitter.

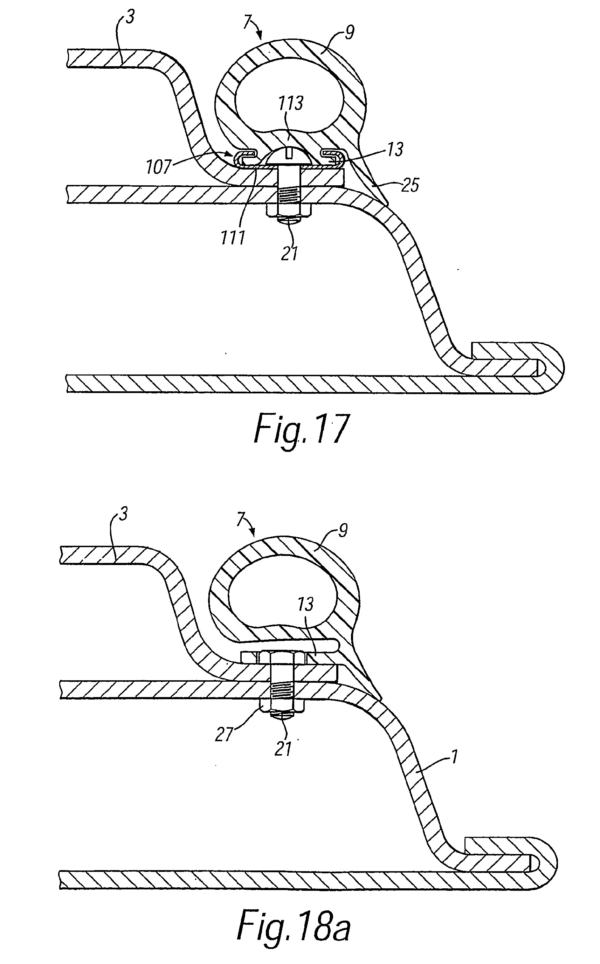

Figure 17 shows variation on the 15a,b embodiment of the invention where the metal insert 107 is modified to have a generally C-shaped cross section having a main generally planar part 111 which lies against the inner door part 3 and is fixed thereto by fixing screw 21. The seal 7 has a base portion 13 which is generally planar in configuration and is coupled to the tubular portion 9 by means of a stem 113, these respective parts of the seal 7 being integrally formed together with the concealing lip 25.

The seal 7 is held in place when its base 13 passes into the C-shaped metal insert 107. The base 13 may pass into the C-shaped metal insert 107 by any suitable method, such as resilient deformation of the base.

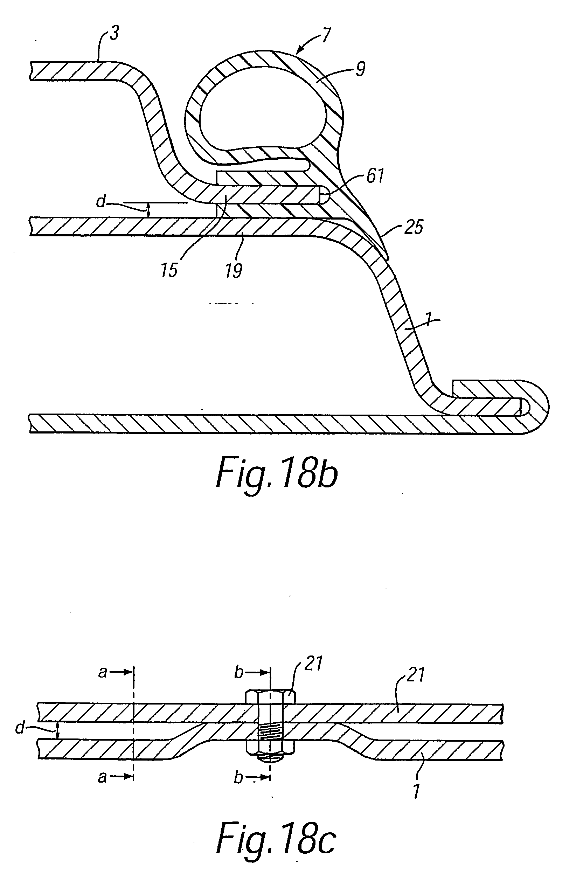

Figures 18a,b and c show a further embodiment. Figure 18c is a side elevation of the periphery of the door, showing the outer part 1 and the inner part 3. Figures 18a and 18b are cross sections taken along the lines B-B and A-A respectively shown in Figure 18c. At the point around the periphery of the door shown in Figure 18a the base 13 of the seal 7 is secured to the inner and outer parts 1 and 3 of the door by the fixing screw 21, which of course also serves to secure the inner and outer parts on 3 of the door together. At the position around the periphery of the door shown in Figure 18b no fixing screw 21 is present. At this position the spacing between the flat region 19 of the outer door part 1 and the terminal portion 15 of the inner door part 3 is increased to a distance d and in this region the base part is extended so that a U-shaped channel 61 is formed which fits around the terminal portion 15 of the inner door part 3.

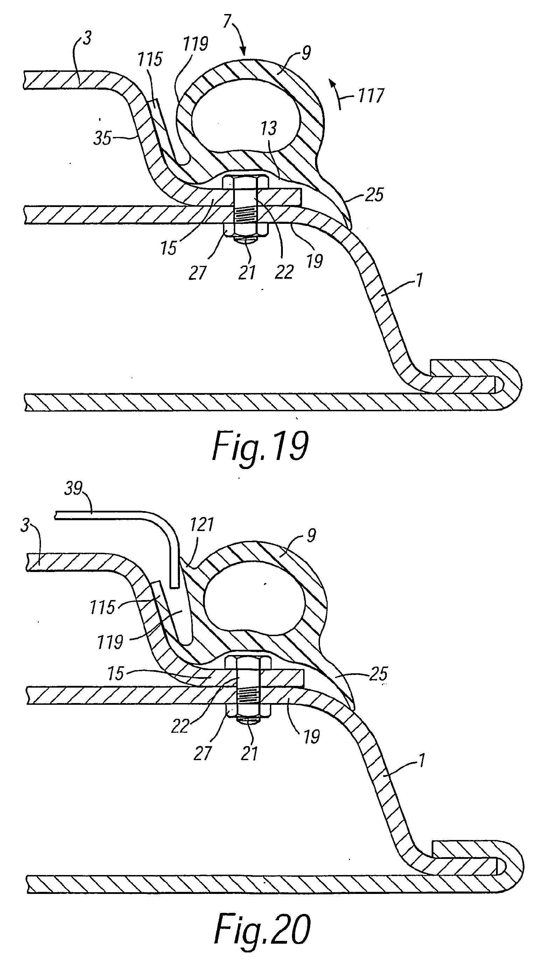

Figures 19 and 20 show a further embodiment of the invention in which the seal 7 is fixed to the inner door part 3 by a suitable adhesive applied at meeting point 35 between the inner door part 3 and the mounting lip 115 which extends integrally from the tubular portion 9 of the seal 7. This secures the seal 7 to the inner door part 3. Access to the aperture 22 to fit the fixing screw 21 thereto is provided by compressing and pivotting upwards in the direction of arrow 117 the seal 7. When the seal 7 is released it returns to the position shown in Figure 19. When in the position shown in Figure 19 a channel 119 is formed in the region where the mounting lip 115 extends generally parallel to the adjacent side wall of the tubular part 9. As shown in Figure 20 the interior trim 39 of the inner part 3 of the door extends into the channel 119. The presence of the relatively rigid trim 39 in the channel 155 may serve to maintain the seal 7 in the position shown in Figures 19and 20 where it covers the fixing screw 21. Additionally, because the trim 39 passes into the channel 119 this hides the edge of the trim 39 to provide a neat and pleasing visual appearance to the interior of the car. A cosmetic lip 121 may extend from the tubular part 9 to press against the outer surface of the trim 39 to further improve the appearance of the interior of the car and to more securely hold the seal 7 in the position shown in Figures 19 and 20.

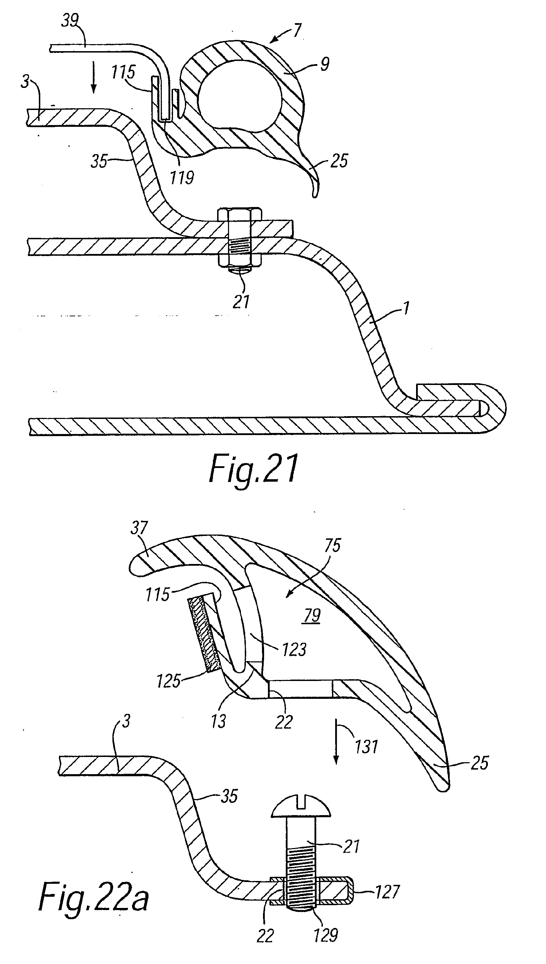

Figure 21 shows an alternative arrangement to that shown in Figures 19 and 20. In the Figure 21 embodiment the seal 7 is fixed in the channel 119 of the seal 7 by adhesive or any other suitable means prior to attachment of the seal 7 to the outer 1 or inner 3 parts of the door. The outer 1 and inner 3 parts of the door may be secured together by fixing screw 21. Subsequently, the trim 39 together with the seal 7 attached thereto are brought into position. The trim 39 is fixed in position to the inner part 3 of the door by any suitable conventional means, which also serves to secure the seal 7 in position on the inner door part 3. Additional adhesive may be applied at the meeting point 35 of the lip 115 to further secure the seal 7 to the inner door part 3. However, this additional adhesive is optional.

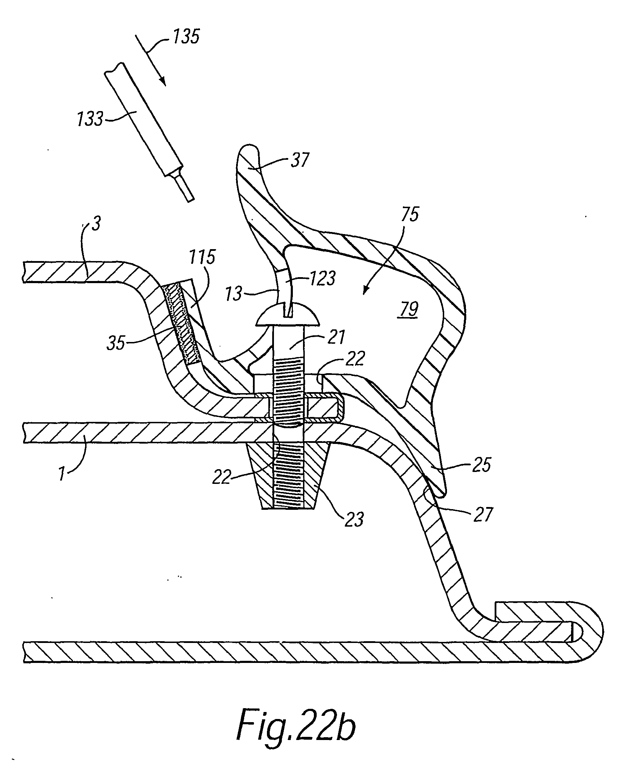

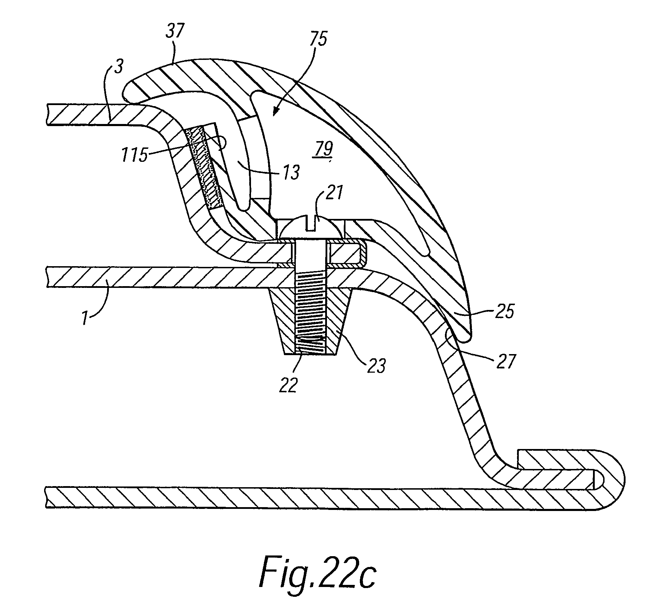

Figures 22A,B and C show a twelfth embodiment of the invention. In this embodiment the seal has a singule tubular part 75 which is of generally triangular (in section) configuration. The generally triangular part 75 includes the portion curved downwardly to form concealment lip 25. Extending from the opposite end of the tubular part 75 is a cosmetic lip 37 for fitting over a trim panel (not shown) mounted on the outer part 3 of the door. Also extending from the tubular part 75 is a mounting lip 115 which extends generally parallel to the base 13 of the seal. The concealment lip 25, cosmetic lip 37 and mounting lip 115 may be integrally formed with the tubular part 75.

The tubular part 75 has an aperture 22 formed therein for allowing a screw 21 to pass therethrough, in a similar manner to the other embodiments described above. A further aperture 123 is formed in the base 13 of the seal, the purpose of which will become apparent from consideration of Figure 22B.

Connected to the mounting lip 115 at the side directed away from the base 13 is double-sided adhesive tape 125. The adhesive tape 125 may have a protection layer (not shown) formed over its exposed surface for convenience of handling. This protection layer is removed prior to fixing the seal to the inner part 3 of the door.

In this embodiment the screw 21 is pre-fitted to the inner door part 3 by means of a pre-fitting clip 127. The pre-fitting clip is generally U-shaped and includes an aperture 129 in "each of the walls thereof. The aperture 129 is generally of smaller diameter than the aperture 22 formed in the outer door part 3. The aperture 129 in each of the walls of the clip 127 allows the screw to be fitted to the clip and held in the position shown in Figure 22A. The tip of the screw 21 lies generally flush with the lower wall of the clip 127 prior to fitting the seal 3 to the inner door part 3. The seal is fitted to the inner door part 3 by bringing the seal towards the inner door part 3 in the direction of arrow 131. The screw 21 passes through aperture 22 in the seal, as shown in Figure 22B. The adhesive tape 125 contacts the attachment point 35 on the inner door part 3 and secures the mounting lip 115 at this point. If required pressure may be applied at this point to increase the strength of the attachment between the mounting lip 115 and the inner door part 3.

The seal is then distorted by the fitter (for example using his finger or a suitable tool) into the position shown in Figure 22B. This brings the apertures 22 and 123 generally into alignment in order that the head of the screw 21 can be accessed by the fitter's screwdriver 133 which is brought towards the screw 21 in the direction of arrow 135. The screwdriver 133 passes through the apertures 123 and 22 and engages the head of the screw 21, allowing the screw to be rotated and to couple the screw 21 to the retaining means 23 by means of their cooperating screw threads. The screw 21 thereby secures the inner door part 3 to the outer door part 1. When the screw 21 has been fully screwed into the retainer 23, the screwdriver 133 can be withdrawn through the apertures 22 and 123 and the pressure applied to the seal can be released. The seal then resiles and takes the position shown in Figure 22C.

In the embodiments the seal or strip 7 is fixed to and seals around a car door having a frame for a window. It should be appreciated that the door may not include a window frame (or the seal may only be attached around a part of the door not including a window frame). Further, the invention is applicable to any closure member. For example, the seal could be applied around the periphery of a sunroof at the region where the glass panel of the sunroof meets the metal frame of the sunroof.

In all the embodiments the strip may be formed by extrusion or moulding.

Of course, any other suitable form of fixing could be used in place of screws 21.

## Claims

1. A closure member comprising first and second parts (1,3) and means (21, 23) for coupling together the first and second parts (1, 3), wherein a sealing strip (7) is provided on the closure member to seal between the closure member and the frame of an aperture closed by the closure member and for obscuring from view a connection region between the first part and the second part (1, 3) of the closure member and wherein the connection region includes the region where means (21, 23) for connecting the first and second parts (1, 3) of the closure member are located, the closure member being
**characterized in that**
a) the sealing strip (7) comprises a tubular member (9) defining a hollow interior (11),
b) the sealing strip (7) is configured such that the means (21, 23) for connecting the first and second parts (1, 3) of the closure member may be applied when the strip (7) is mounted on the closure member, and
c) the tubular member (9) is configured to have a first position in which it allows access to the connecting means (21, 23) and a second operative position in which it obscures the connecting means (21, 23) the tubular member (9) being movable from said first position to said second position by applying a pushing force thereto.

2. The closure member of claim 1, wherein the closure member comprises a vehicle door.

3. The closure member of claim 1 or 2, wherein the means for connecting (21, 23) the first and second parts (1, 3) comprises a screw, a clip or the like.

4. The closure member of claim 1, 2 or 3, wherein the connection region includes the point at which the first and second parts (1, 3) of the closure member meet as would be viewed from the exterior of the closure member.

5. The closure member of claim 4, wherein the strip (7) comprises a lip or protrusion (25, 41) extending from the main body of the strip and abutting the closure member, the lip or protrusion (25, 41) being arranged such that it conceals the point at which the first and second parts of the closure member meet.

6. The closure member of any one of the preceding claims, wherein the sealing strip (7) is configured for mounting at the peripheral edge region of the closure member.

7. The closure member of any one of the preceding claims, wherein the first and second parts (1, 3) of the closure member are fixed together before the strip (7) is attached.

8. The closure member of any one of the preceding claims, wherein one or more apertures, cuts or slits are formed in the strip (7) to allow the connecting means (21) to pass there through for connecting the first and second parts (1, 3) of the closure member.

9. The closure member of claim 8, wherein two of said apertures, cuts or slits are provided, and wherein the strip (7) is resiliently deformable in order to bring a first of said apertures, cuts or slits into alignment with the second of said apertures, cuts or slits to allow the connecting means (21) to be applied, and further wherein, after said resilient deformation, the strip (7) resiles and the alignment of said two apertures, cuts or slits is lost.

10. The closure member of any one of the preceding claims, comprising adhesive means (17) for mounting the strip to at least said first part (3) of the closure member.

11. The closure member of claim 10, wherein said adhesive means (17) comprises double-sided adhesive tape.

12. The closure member of any one of the preceding claims, wherein the connecting means (21) further connects the strip (7) to at least the first part of said closure member.

13. The closure member of any one of the preceding claims, comprising a tubular portion (9) for pressing against, the frame of the aperture closed by the closure member, the tubular portion containing relatively highly compressible material.

14. The closure member of claim 13, wherein the said compressible material comprises air.

15. The closure member of claim 13 or 14 when dependent on claim 9, wherein the tubular portion (9) defines a hollow region (11) and the apertures, cuts or slits formed in the seal (7) form a passageway from the hollow area (11) to the exterior of the tubular portion (9).

16. The closure member of any one of the preceding claims, comprising a resiliently deformable lip (115, 121) for overlying a trim panel (39) coupled to at least said first part (3) of the closure member.

17. The closure member of any one of the preceding claims, wherein the strip comprises (7) a base portion (13) for attachment to at least the first part (3) of said closure member, the base portion (13) having a plurality of recesses formed therein to accommodate the connecting means.

18. The closure member of claim 17, wherein the base (13) is pivotable or tiltable with respect to the main body of the strip (7), and wherein said base and said main body have corresponding engagement formations (49, 51) for releasably coupling together the base (13) and the main portion at first relative positions thereto, and for allowing disengagement of said engagement formations (49, 51) by the application of force to the strip (7) to allow pivoting or tilting relative movement between the main portion and the base (13).

19. The closure member of claim 18, wherein said pivoting or tilting allows said connecting means (21) to be applied.

20. The closure member of any one of the preceding claims, wherein the strip (7) comprises a channel-shaped portion for coupling to a flange (15) of at least the first part (3) of said closure member.

21. The closure member of claim 20, wherein said channel-shaped portion includes a relatively rigid channel-shaped embedded carrier.

22. The closure member of any one of the preceding claims, wherein the strip (7) is configured to cooperate with a relatively rigid clamping member which locates the strip (7) when said connecting means (21) is applied.

23. The closure member of any one of the preceding claims, wherein the strip (7) comprises a plurality of mounting formations formed at spaced apart intervals along the length of the strip.

24. The closure member of claim 23, wherein the first and second parts (1, 3) of the closure member are configured to lie in closer proximity to one another at the regions
where said spaced apart mounting formations are provided, the spacing between the first and second parts (1, 3) being increased at other regions.

25. The closure member according to any one of the preceding claims, including means for coupling the strip (7) to a trim portion (39) for mounting onto the first part (3) of said closure member.

26. The closure member of any one of the preceding claims, wherein the connecting means (21) are coupled to the closure member in a mounting position prior to mounting the strip (7) on the closure member, the connecting means being (21) moved from said mounting position to a fixing position after said strip (7) is mounted to said closure member.

27. The closure member of any one of the preceding claims, wherein the connecting means (21) is mounted to the first part (3) prior to mounting the strip (7) on the second part (1).

28. The closure member of claim 27, wherein the connecting means (21) is mounted to the first part (3) by a fixing part (127) which locates the connecting means (21) with respect to the first part (3).

## Patentansprüche

1. Ein Verschlussteil umfassend ein erstes und ein zweites Teil (1, 3) und Mittel (21, 23) zum Verbinden des ersten und zweiten Teils (1, 3), wobei ein Dichtstreifen (7) am Verschlussteil vorgesehen ist zum Dichten zwischen dem Verschlussteil und dem Rahmen einer Öffnung, die durch das Verschlussteil verschlossen ist, und zum Abdecken eines Verbindungsbereiches zwischen dem ersten Teil und dem zweiten Teil (1, 3) des Verschlussteils als Sichtschutz und wobei der Verbindungsbereich den Bereich, in dem Mittel (21, 23) zum Verbinden des ersten und zweiten Teils (1, 3) des Verschlussteils angeordnet sind, umfasst, wobei das Verschlussteil
**dadurch gekennzeichnet ist, dass**
a) der Dichtstreifen (7) ein Schlauchteil (9), das einen hohlen Innenraum (11) definiert, umfasst,
b) der Dichtstreifen (7) derart ausgebildet ist, dass die Mittel (21, 23) zum Verbinden des ersten und zweiten Teils (1, 3) des Verschlussteils angeordnet werden können, wenn der Streifen (7) an dem Verschlussteil angebracht ist, und
c) das Schlauchteil (9) ausgebildet ist, eine erste Position, in der es einen Zugang zu den Verbindungsmitteln (21, 23) erlaubt, und eine zweite Betriebsposition, in der es die Verbindungsmittel (21, 23) abdeckt, aufzuweisen, wobei das Schlauchteil (9) aus der besagten ersten Position in die besagte zweite Position durch Aufwenden einer Druckkraft hierauf beweglich ist.

2. Das Verschlussteil nach Anspruch 1, wobei das Verschlussteil eine Fahrzeugtür aufweist.

3. Das Verschlussteil nach Anspruch 1 oder 2, wobei die Mittel zum Verbinden (21, 23) des ersten und zweiten Teils (1, 3) eine Schraube, einen Clip oder dergleichen umfassen.

4. Das Verschlussteil nach Anspruch 1, 2 oder 3, wobei der Verbindungsbereich den Punkt umfasst, an dem das erste und zweite Teil (1, 3) des Verschlussteils sich treffen, wie gesehen würde von außerhalb des Verschlussteils.

5. Das Verschlussteil nach Anspruch 4, wobei der Streifen (7) eine Lippe oder einen Vorsprung (25, 41) umfasst, der sich von dem Hauptkörper des Streifens erstreckt und am Verschlussteil anliegt, wobei die Lippe oder der Vorsprung (25, 41) derart angeordnet sind, dass sie/er den Punkt verdeckt, an dem das erste und das zweite Teil des Verschlussteils sich treffen.

6. Das Verschlussteil nach einem der vorangehenden Ansprüche, wobei der Dichtstreifen (7) ausgebildet ist zum Anordnen an einem umfänglichen Verbindungsbereich des Verschlussteils.

7. Das Verschlussteil nach einem der vorangehenden Ansprüche, wobei das erste und zweite Teil (1, 3) des Verschlussteils aneinander befestigt werden, bevor der Streifen (7) angeordnet wird.

8. Das Verschlussteil nach einem der vorangehenden Ansprüche, wobei eine oder mehrere Öffnungen, Schnitte oder Schlitze in dem Streifen (7) gebildet sind, um den Verbindungsmitteln (21) einen Durchgang hierdurch zu ermöglichen, um das erste und das zweite Teil (1, 3) des Verschlussteils zu verbinden.

9. Das Verschlussteil nach Anspruch 8, wobei zwei der besagten Öffnungen, Schnitte oder Schlitze vorgesehen sind und wobei der Streifen (7) elastisch deformierbar ist, um eine erste der besagten Öffnungen, Schnitte oder Schlitze in Ausrichtung mit der zweiten der besagten Öffnungen, Schnitte oder Schlitze zu bringen, um die Anordnung des Verbindungsmittels (21) zu ermöglichen, und weiterhin wobei der Streifen (7) sich zurückstellt und die Ausrichtung der zwei besagten öffnungen, Schnitte oder Schlitze nach der besagten elastischen Deformierung aufgehoben wird.

10. Das Verschlussteil nach einem der vorangehenden Ansprüche, umfassend Klebemittel (17) zum Anordnen des Streifens an wenigstens dem besagten ersten Teil (3) des Verschlussteils.

11. Das Verschlussteil nach Anspruch 10, wobei die besagten Klebemittel (17) doppelseitiges Klebeband umfassen.

12. Das Verschlussteil nach einem der vorangehenden Ansprüche, wobei die Verbindungsmittel (21) weiterhin den Streifen (7) mit zumindest dem ersten Teil des Verschlussteils verbinden.

13. Das Verschlussteil nach einem der vorangehenden Ansprüche, umfassend einen Schlauchabschnitt (9) zum Anpressen gegen den Rahmen der durch das Verschlussteil verschlossenen Öffnung, wobei der Schlauchabschnitt ein vergleichsweise hoch komprimierbares Material enthält.

14. Das Verschlussteil nach Anspruch 13, wobei das besagte komprimierbare Material Luft aufweist.

15. Das Verschlussteil nach Anspruch 13 oder 14, wenn abhängig von Anspruch 9, wobei der Schlauchabschnitt (9) einen hohlen Innenraum (11) definiert und die Öffnungen, Schnitte oder Schlitze in der Dichtung (7) einen Durchgang von dem hohlen Bereich (11) zum Außenraum des Schlauchabschnitts (9) bilden.

16. Das Verschlussteil nach einem der vorangehenden Ansprüche, umfassend eine elastisch deformierbare Lippe (115, 121) zum Auflegen einer Innenverkleidung (39), die mit zumindest dem besagten ersten Teil (3) des Verschlussteils verbunden ist.

17. Das Verschlussteil nach einem der vorangehenden Ansprüche, wobei der Streifen (7) einen Basisabschnitt (13) zum Anbringen an zumindest dem ersten Teil (3) des besagten Verschlussteils umfasst, wobei der Basisabschnitt (13) eine Mehrzahl von darin eingeformten Ausnehmungen zum Aufnehmen von Verbindungsmitteln aufweist.

18. Das Verschlussteil nach Anspruch 17, wobei die Basis (13) schwenkbar oder verkippbar gegenüber dem Hauptkörper des Streifens (7) ist, und wobei die besagte Basis und der besagte Hauptkörper entsprechende Eingriffsformationen (49, 51) zur lösbaren Verbindung der Basis (13) und des Hauptabschnitts aneinander in ersten Relativpositionen daran und zum Ermöglichen des Lösens der besagten Eingriffsformationen (49, 51) durch Aufwendung einer Kraft auf den Streifen (7), um eine schwenkende oder kippende Relativbewegung zwischen dem Hauptabschnitt und der Basis (13) zu ermöglichen, aufweisen.

19. Das Verschlussteil nach Anspruch 18, wobei das besagte Verschwenken oder Verkippen das Anbringen besagter Verbindungsmittel (21) ermöglicht.

20. Das Verschlussteil nach einem der vorangehenden Ansprüche, wobei der Streifen (7) einen kanalförmigen Abschnitt zum Verbinden mit einem Flansch (15) zumindest des ersten Teils (3) des Verschlussteils umfasst.

21. Das Verschlussteil nach Anspruch 20, wobei der besagte kanalförmige Abschnitt einen vergleichsweise starren, kanalförmigen, eingebetteten Träger umfasst.

22. Das Verschlussteil nach einem der vorangehenden Ansprüche, wobei der Streifen (7) ausgebildet ist, mit einem vergleichsweise starren Klemmteil zusammenzuwirken, der den Streifen (7) festlegt, wenn die besagten Verbindungsmittel (21) angeordnet werden.

23. Das Verschlussteil nach einem der vorangehenden Ansprüche, wobei der Streifen (7) eine Mehrzahl von Verbindungsabschnitten aufweist, die an beabstandeten Intervallen entlang der Länge des Streifens gebildet sind.

24. Das Verschlussteil nach Anspruch 23, wobei das erste und zweite Teil (1, 3) des Verschlussteils ausgebildet sind, in größerer Nähe zueinander zu liegen in Bereichen, in denen voneinander beabstandete Verbindungsabschnitte vorgesehen sind, wobei der Abstand zwischen dem ersten und zweiten Teil (1, 3) in anderen Bereichen vergrößert ist.

25. Das Verschlussteil nach einem der vorangehenden Ansprüche, umfassend Mittel zum Verbinden des Streifens (7) mit einem Verkleidungsabschnitt (39) zum Anordnen an dem ersten Teil (3) des Verschlussteils.

26. Das Verschlussteil nach einem der vorangehenden Ansprüche, wobei die Verbindungsmittel (21) mit dem Verschlussteil in einer Verbindungsposition verbunden werden, bevor der Streifen (7) an dem Verschlussteil angeordnet wird, wobei die Verbindungsmittel (21) aus der besagten Verbindungsposition in eine Befestigungsposition bewegt werden, nachdem der besagte Streifen (7) an dem besagten Verschlussteil angeordnet wird.

27. Das Verschlussteil nach einem der vorangehenden Ansprüche, wobei die Verbindungsmittel (21) an dem ersten Teil (3) angeordnet werden, bevor der Streifen (7) an dem zweiten Teil (1) angeordnet wird.

28. Das Verschlussteil nach Anspruch 27, wobei die Verbindungsmittel (21) an dem ersten Teil (3) angeordnet werden über ein Befestigungsteil (127), das die Verbindungsmittel (21) bezüglich des ersten Teils (3) festlegt.

## Revendications

1. Elément de fermeture comprenant des première et seconde parties (1, 3) et des moyens (21, 23) pour coupler ensemble les première et seconde parties (1, 3), dans lequel une bande d'étanchéité (7) est prévue sur l'élément de fermeture pour assurer l'étanchéité entre l'élément de fermeture et l'encadrement d'une ouverture fermée par l'élément de fermeture et pour obscurcir visuellement une région de liaison entre la première partie et la seconde partie (1, 3) de l'élément de fermeture et dans lequel la région de liaison comprend la région où sont situés les moyens (21, 23) destinés à relier les première et seconde parties (1, 3) de l'élément de fermeture, l'élément de fermeture étant **caractérisé en ce que**
a) la bande d'étanchéité (7) comprend un élément tubulaire (9) définissant un intérieur creux (11),
b) la bande d'étanchéité (7) est configurée de telle sorte que les moyens (21, 23) pour relier les première et seconde parties (1, 3) de l'élément de fermeture peuvent être appliqués lorsque la bande (7) est montée sur l'élément de fermeture et
c) l'élément tubulaire (9) est configuré de manière à avoir une première position dans laquelle il permet l'accès aux moyens de liaison (21, 23) et une seconde position opérationnelle dans laquelle il obscurcit les moyens de liaison (21, 23), l'élément tubulaire (9) étant mobile de ladite première position à ladite seconde position en appliquant une force de poussée sur celui-ci.

2. Elément de fermeture selon la revendication 1, dans lequel l'élément de fermeture comprend une portière de véhicule.

3. Elément de fermeture selon la revendication 1 ou 2, dans lequel les moyens pour relier (21, 23) les première et seconde parties (1, 3) comprennent une vis, un étrier ou similaire.

4. Elément de fermeture selon la revendication 1, 2 ou 3, dans lequel la région de liaison comprend le point au niveau duquel les première et seconde parties (1, 3) de l'élément de fermeture se rejoignent comme on peut le voir depuis l'extérieur de l'élément de fermeture.

5. Elément de fermeture selon la revendication 4, dans lequel la bande (7) comprend une lèvre ou saillie (25, 41) s'étendant depuis le corps principal de la bande et venant en butée contre l'élément de fermeture, la lèvre ou la saillie (25, 41) étant agencée de telle sorte qu'elle dissimule le point au niveau duquel se rejoignent les première et seconde parties de l'élément de fermeture.

6. Elément de fermeture selon l'une quelconque des revendications précédentes, dans lequel la bande d'étanchéité (7) est configurée pour être montée au niveau de la région du bord périphérique de l'élément de fermeture.

7. Elément de fermeture selon l'une quelconque des revendications précédentes, dans lequel les première et seconde parties (1, 3) de l'élément de fermeture sont fixées ensemble avant fixation de la bande (7).

8. Elément de fermeture selon l'une quelconque des revendications précédentes, dans lequel une ou plusieurs ouvertures, découpes ou fentes sont formées dans la bande (7) pour permettre aux moyens de liaison (21) de passer à travers celles-ci pour relier les première et seconde parties (1, 3) de l'élément de fermeture.

9. Elément de fermeture selon la revendication 8, dans lequel sont prévues deux desdites ouvertures, découpes ou fentes et dans lequel la bande (7) est déformable élastiquement afin d'amener une première desdites ouvertures, découpes ou fentes en alignement avec la deuxième desdites ouvertures, découpes ou fentes pour permettre aux moyens de liaison (21) d'être appliqués, et dans lequel, en outre, après ladite déformation élastique, la bande (7) est souple et l'alignement desdites deux ouvertures, découpes ou fentes est perdu.

10. Elément de fermeture selon l'une quelconque des revendications précédentes, comprenant des moyens adhésifs (17) pour monter la bande sur au moins ladite première partie (3) de l'élément de fermeture.

11. Elément de fermeture selon la revendication 10, dans lequel lesdits moyens adhésifs (17) comprennent du ruban adhésif double face.

12. Elément de fermeture selon l'une quelconque des revendications précédentes, dans lequel les moyens de liaison (21) relient en outre la bande (7) à au moins la première partie dudit élément de fermeture.

13. Elément de fermeture selon l'une quelconque des revendications précédentes, comprenant une partie tubulaire (9) destinée à s'appuyer contre l'encadrement de l'ouverture fermée par l'élément de fermeture, la partie tubulaire contenant du matériau relativement hautement compressible.

14. Elément de fermeture selon la revendication 13, dans lequel ledit matériau compressible comprend de l'air.

15. Elément de fermeture selon la revendication 13 ou 14 lorsqu'elle est dépendante de la revendication 9, dans lequel la partie tubulaire (9) définit une région creuse (11) et que les ouvertures, découpes ou fentes formées dans le joint (7) forment un passage de la zone creuse (11) à l'extérieur de la partie tubulaire (9).

16. Elément de fermeture selon l'une quelconque des revendications précédentes, comprenant une lèvre déformable élastiquement (115, 121) pour recouvrir un panneau d'habillage (39) couplé à au moins ladite première partie (3) de l'élément de fermeture.

17. Elément de fermeture selon l'une quelconque des revendications précédentes, dans lequel la bande comprend (7) une partie de base (13) pour la fixation à au moins la première partie (3) dudit élément de fermeture, la partie de base (13) ayant une pluralité de retraits formés à l'intérieur de celle-ci pour loger les moyens de liaison.

18. Elément de fermeture selon la revendication 17, dans lequel la base (13) peut pivoter ou être inclinée par rapport au corps principal de la bande (7), et dans lequel ladite base et ledit corps principal ont des formations de mise en prise correspondantes (49, 51) pour coupler de manière détachable la base (13) et la partie principale aux premières positions relatives de celle-ci, et pour permettre le désaccouplement desdites formations de mise en prise (49, 51) grâce à l'application de force sur la bande (7) pour permettre un mouvement relatif de pivotement ou d'inclinaison entre la partie principale et la base (13).

19. Elément de fermeture selon la revendication 18, dans lequel ledit pivotement ou ladite inclinaison permet l'application desdits moyens de liaison (21).

20. Elément de fermeture selon l'une quelconque des revendications précédentes, dans lequel la bande (7) comprend une partie en forme de canal pour couplage à un rebord (15) d'au moins la première partie (3) dudit élément de fermeture.

21. Elément de fermeture selon la revendication 20, dans lequel ladite partie en forme de canal comprend un support encastré en forme de canal relativement rigide.

22. Elément de fermeture selon l'une quelconque des revendications précédentes, dans lequel la bande (7) est configurée pour coopérer avec un élément de serrage relativement rigide qui positionne la bande (7) lorsque lesdits moyens de liaison (21) sont appliqués.

23. Elément de fermeture selon l'une quelconque des revendications précédentes, dans lequel la bande (7) comprend une pluralité de formations de montage formées à intervalles espacés le long de la longueur de la bande.

24. Elément de fermeture selon la revendication 23, dans lequel les première et seconde parties (1, 3) de l'élément de fermeture sont configurées pour se trouver à proximité immédiate l'une de l'autre au niveau des régions où sont prévues lesdites formations de montage espacées, l'espacement entre les première et seconde parties (1, 3) étant agrandi au niveau d'autres régions.

25. Elément de fermeture selon l'une quelconque des revendications précédentes, comprenant des moyens pour coupler la bande (7) à une partie d'habillage (39) pour montage sur la première partie (3) dudit élément de fermeture.

26. Elément de fermeture selon l'une quelconque des revendications précédentes, dans lequel les moyens de liaison (21) sont couplés à l'élément de fermeture dans une position de montage avant montage de la bande (7) sur l'élément de fermeture, les moyens de liaison (21) étant déplacés de ladite position de montage à une position de fixation une fois que ladite bande (7) est montée sur ledit élément de fermeture.

27. Elément de fermeture selon l'une quelconque des revendications précédentes, dans lequel les moyens de liaison (21) sont montés sur la première partie (3) avant montage de la bande (7) sur la seconde partie (1).

28. Elément de fermeture selon la revendication 27, dans lequel les moyens de liaison (21) sont montés sur la première partie (3) grâce à une partie de fixation (127) qui positionne les moyens de liaison (21) par rapport à la première partie (3).
